# EUROPÄISCHE PATENTANMELDUNG

(11) **EP 1 413 939 A1**
(43) Veröffentlichungstag der Anmeldung: **28.04.2004**
(21) Anmeldenummer: 03023214.4
(22) Anmeldetag: 13.10.2003
(51) Int. Cl.: G05B 19/4093, G05B 19/042, G05B 19/048, G05B 19/408

(54) **Programmier- und Betriebsverfahren für eine programmierbare industrielle Steuerung, insbesondere eine CNC-Steuerung**

(30) Priorität: 24.10.2002 DE 10249677
(71) Anmelder: SIEMENS AKTIENGESELLSCHAFT, 80333 München (DE)
(72) Erfinder: Moll, Ralf, 91058 Erlangen (DE)

(57) **Zusammenfassung**

Zur Programmerstellung für eine programmierbare industrielle Steuerung (5) wird eine Folge (3) von Steuerbefehlen, die als solche von der Steuerung (5) sinnvoll interpretierbar und somit ausführbar sind, maschinell in einen Binärcode umcodiert, anhand dessen die ursprüngliche Folge (3) von Steuerbefehlen wieder rekonstruierbar ist. Der Binärcode wird für die Steuerung (5) bereitgestellt und in dieser hinterlegt. Zur Programmausführung wird in der Steuerung (5) die Folge (3) von Steuerbefehlen rekonstruiert. Die Steuerung (5) steuert unmittelbar nach dem Ermitteln der Steuerbefehle eine gesteuerte Einrichtung (8) entsprechend an.

## Beschreibung

Die vorliegende Erfindung betrifft ein Programmierverfahren und ein Betriebsverfahren für eine programmierbare industrielle Steuerung, insbesondere eine CNC-Steuerung. Sie betrifft ferner eine korrespondierende programmierbare industrielle Steuerung, insbesondere eine CNC-Steuerung.

Im Stand der Technik wird - direkt oder z.B. aus einem CAD-Programm aus indirekt - eine Folge von Steuerbefehlen generiert, die als solche von der Steuerung sinnvoll interpretierbar und somit ausführbar sind. Diese Folge von Steuerbefehlen wird beim Stand der Technik in der Steuerung hinterlegt und im Betrieb der Steuerung von dieser abgearbeitet.

Die Folge von Steuerbefehlen ist in aller Regel in ASCII-Code in der Steuerung hinterlegt. Die Folge von Steuerbefehlen ist daher frei zugänglich und änderbar. Aufgrund der Änderbarkeit können auch Nutzungsschranken nicht implementiert werden bzw. sind ohne weiteres entfernbar. Auch ist der Code umfangreich. Er benötigt also viel Speicherplatz und seine Einspeicherung in den Speicher der CNC-Steuerung, ist zeitaufwendig.

Die Aufgabe der vorliegenden Erfindung besteht darin, ein Programmierverfahren und ein korrespondierendes Betriebsverfahren für eine programmierbare industrielle Steuerung, insbesondere eine CNC-Steuerung, zu schaffen, mittels derer obige Nachteile zumindest teilweise behoben werden.

Die Aufgabe wird für das Programmierverfahren dadurch gelöst, dass die Folge von Steuerbefehlen maschinell in einen Binärcode umcodiert wird, anhand dessen die ursprüngliche Folge von Steuerbefehlen wieder rekonstruierbar ist, und dass der Binärcode für die Steuerung bereit gestellt wird.

Für das Betriebsverfahren wird die Aufgabe dadurch gelöst, dass der Binärcode in der Steuerung hinterlegt ist, dass von der Steuerung die ursprüngliche Folge von Steuerbefehlen wieder rekonstruiert wird und dass die Steuerung unmittelbar nach dem Ermitteln der Steuerbefehle eine gesteuerte Einrichtung, z.B. eine Werkzeugmaschine, entsprechend ansteuert. Die Steuerbefehle werden also nicht in ihrer Gesamtheit vorab ermittelt und in der Steuerung remanent hinterlegt. Vielmehr sind sie nur temporär während des Betriebs der Steuerung vorhanden.

Wenn der Binärcode gegenüber der Folge von Steuerbefehlen komprimiert ist, benötigt er besonders wenig Speicherplatz.

Wenn der Binärcode gegenüber der Folge von Steuerbefehlen kryptographisch verschlüsselt ist, ist ein Entschlüsseln und Ändern der Folge von Steuerbefehlen nicht möglich bzw. zumindest erschwert.

Im Rahmen der Verschlüsselung sind verschiedene Maßnahmen realisierbar.

Beispielsweise kann der Binärcode in verschlüsselter Form eine Nutzungsschranke enthalten, mittels derer der Umfang der Nutzung der Folge von Steuerbefehlen beschränkbar ist. Im Betrieb der Steuerung erfolgt dann ein Test bezüglich der Nutzungsschranke. Die Nutzungsschranke kann dabei verschiedene Kriterien enthalten. Beispiele für eine Nutzungsschranke sind eine Absolutzeit (ein Ablaufdatum), eine Nutzungsdauer ab der ersten Nutzung, eine Nutzungsdauer in Betriebsstunden, eine Anzahl von Aufrufen der Folge von Steuerbefehlen oder beliebige Kombinationen dieser Möglichkeiten.

Es ist auch möglich, dass der Binärcode in verschlüsselter Form einen Individualisierungscode enthält, mittels dessen ein Abarbeiten der Folge von Steuerbefehlen auf eine individuelle Steuerung beschränkbar ist. Beispielsweise weisen moderne Mikroprozessoren einen individuellen Code auf. Dieser Code kann vor der Abarbeitung der Folge von Steuerbefehlen abgefragt und mit dem Individualisierungscode verglichen werden.

Auch kann der Binärcode in verschlüsselter Form einen Benutzercode enthalten, mittels dessen ein Abarbeiten der Folge von Steuerbefehlen auf einen Benutzer beschränkbar ist. Beispielsweise kann vom Benutzer ein Passwort abgefragt und mit dem Benutzercode verglichen werden.

Schließlich kann der Binärcode in verschlüsselter Form noch einen Kommentar für die Folge von Steuerbefehlen enthalten. Der Kommentar kann z.B. den Autor, das Erstellungsdatum und/oder den ersten Empfänger des Binärcodes enthalten. Insbesondere durch die Hinterlegung des ersten Empfängers kann beispielsweise eine Rechtsverfolgung bei einer Verletzung des Urheberrechts oder einer sonstigen unbefugten Weitergabe des Binärcodes erleichtert werden.

Das Verschlüsselungsverfahren zum Erstellen des Binärcodes kann prinzipiell beliebiger Natur sein. Vorteilhafterweise aber ist der Binärcode gemäß einem public-key-Verfahren verschlüsselt.

Weitere Vorteile und Einzelheiten ergeben sich aus der nachfolgenden Beschreibung eines Ausführungsbeispiels. Dabei zeigen in Prinzipdarstellung
- FIG 1: eine Erstellungseinrichtung für einen Binärcode und
- FIG 2: eine programmierbare industrielle Steuerung.

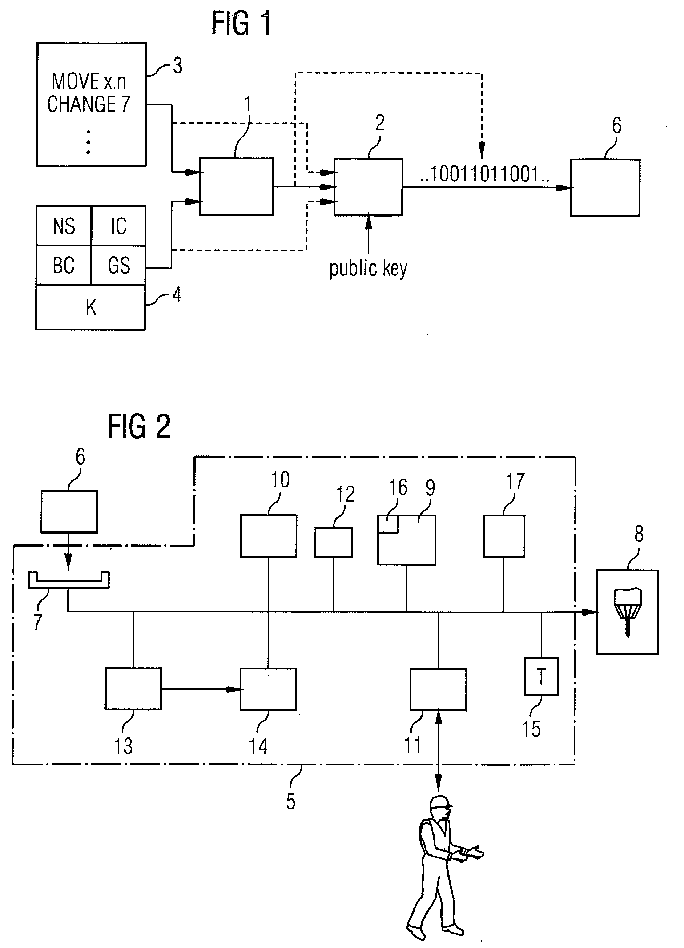

Gemäß FIG 1 weist ein Erstellungssystem für einen Binärcode einen Kompressor 1 und einen Codierer 2 auf. Dem Kompressor 1 werden zum einen eine Folge 3 von Steuerbefehlen und zum anderen Zusatzinformationen 4 zugeführt. Die Steuerbefehle sind gemäß FIG 1 ersichtlich im ASCII-Code abgefasst.

Der Kompressor 1 komprimiert die ihm zugeführten Informationen 3, 4 und leitet die komprimierte Fassung an den Codierer 2 weiter. Der Codierer 2 führt gemäß einem public-key-Verfahren eine kryptographische Verschlüsselung der ihm zugeführten Informationen durch. Das Ausgangssignal des Codierers 2 ist ein Binärcode, der für eine programmierbare industrielle Steuerung 5 (siehe FIG 2) bereit gestellt wird. Beispielsweise kann der Binärcode in einer Speicherkarte 6 eingespeichert werden, die später in eine Speicherkartenschnittstelle 7 der Steuerung 5 eingeführt wird.

Die Steuerbefehle der Folge 3 von Steuerbefehlen sind als solche von der Steuerung 5 sinnvoll interpretierbar und somit ausführbar. Sie sind, wie bereits erwähnt, in aller Regel im ASCII-Code abgefasst. Der Binärcode hingegen, in den die Folge 3 von Steuerbefehlen mittels des Kompressors 1 und des Codierers 2 maschinell umcodiert wird, ist hingegen selbstverständlich kein ASCII-Code.

Die Zusatzinformationen 4 werden ebenfalls komprimiert und kryptographisch verschlüsselt. Sie können eine Vielzahl von Informationen NS, IC, BC, K, GS umfassen. Gemäß FIG 1 umfassen die Zusatzinformationen 4 eine Nutzungsschranke NS, einen Individualisierungscode IC, einen Benutzercode BC, einen Kommentar K sowie einen geheimen Schlüssel GS. Auf die Bedeutung dieser Informationen NS, IC, BC, K, GS wird später in Verbindung mit FIG 2 noch eingegangen.

Aufgrund der Komprimierung im Kompressor 1 ist der Binärcode gegenüber der Folge 3 von Steuerbefehlen komprimiert. Aufgrund der Verschlüsselung im Codierer 2 ist der Binärcode gegenüber der Folge 3 von Steuerbefehlen kryptographisch verschlüsselt.

Weder die Kompression noch die Verschlüsselung reduzieren den Informationsgehalt. Der volle Informationsgehalt sowohl der Folge 3 von Steuerbefehlen als auch der Zusatzinformationen 4 ist daher im Binärcode enthalten. Anhand des Binärcodes sind daher sowohl die ursprüngliche Folge 3 von Steuerbefehlen als auch die Zusatzinformationen 4 wieder rekonstruierbar.

Bei der Ausführungsform gemäß FIG 1 werden erst die Kompression und danach die kryptographische Verschlüsselung ausgeführt. Es wäre aber auch möglich, nur eine Komprimierung oder nur eine Verschlüsselung der Folge 3 von Steuerbefehlen durchzuführen. Dies ist in FIG 1 gestrichelt angedeutet. Auch wäre es prinzipiell möglich, die Komprimierung und die kryptographische Verschlüsselung in umgekehrter Reihenfolge oder in einem einzigen Schritt durchzuführen.

Falls die kryptographische Verschlüsselung entfällt, sind die Zusatzinformationen 4 mit Ausnahme des Kommentars K nutzlos. Denn dann könnten die Zusatzinformationen 4 ohne weiteres durch eine einfache Dekomprimierung wieder in ASCII-Code überführt werden, der für Menschen ohne weiteres lesbar und verstehbar ist. Andererseits kann bei Anwendung nur einer Kompression (also keiner Verschlüsselung) eine erhöhte Komprimierung erreicht werden. Dies gilt ganz besonders, wenn der Kompressionsalgorithmus auf die zu komprimierende Folge von Steuerbefehlen zugeschnitten ist. Beispielsweise kann als Codierungseinheit in diesem Fall jeweils ein Programmsatz herangezogen werden.

Gemäß FIG 2 wird von der Steuerung 5 eine Werkzeugmaschine 8 gesteuert. Die Steuerung 5 ist somit als CNC-Steuerung ausgebildet.

Der Binärcode ist in der Steuerung 5 hinterlegt, im vorliegenden Fall durch Einführen der Speicherkarte 6 in die Speicherkartenschnittstelle 7 der Steuerung 5.

Bei Inbetriebnahme der Steuerung 5 arbeitet ein Prozessor 9 zunächst ein Computerprogramm 10 ab. Unter Abarbeitung des Computerprogramms 10 fragt der Prozessor 9 über eine Mensch-Maschine-Schnittstelle 11 von einem Benutzer zunächst einen persönlichen Schlüssel ab. Es ist möglich, dass der Prozessor 9 den Schlüssel bei jeder erneuten Inbetriebnahme abfragt. Es ist aber auch möglich, dass dies nur bei der ersten Inbetriebnahme erfolgt und der Schlüssel danach vom Prozessor 9 in einem Remanentspeicher 12, z. B. einem EEPROM-Speicher 12, hinterlegt wird.

Der eingegebene persönliche Schlüssel wird vom Prozessor 9 an einen Decodierer 13 weitergegeben. Der Decodierer 13 liest daraufhin aus der Speicherkarte 6 den Binärcode aus und entschlüsselt ihn gemäß dem persönlichen Schlüssel. Nach dem Entschlüsseln werden durch Dekomprimieren in einem Dekompressor 14 wieder die Folge 3 von Befehlen und die Zusatzinformationen 4 erlangt und an den Prozessor 9 weitergeleitet.

Unter weiterer Abarbeitung des Computerprogramms 10 fragt der Prozessor 9 von einem Zeitgeber 15 - beispielsweise - die Absolutzeit ab und vergleicht sie mit der Nutzungsschranke NS. Je nach dem Ergebnis des Vergleichs fährt der Prozessor 9 dann mit der weiteren Abarbeitung des Computerprogramms 10 fort oder beendet seinen Betrieb. Mittels der Nutzungsschranke NS kann also der Umfang der Nutzung der Folge 3 von Steuerbefehlen beschränkt werden.

Wenn die weitere Abarbeitung des Computerprogramms 10 fortgesetzt wird, verschlüsselt der Prozessor 9 gemäß dem geheimen Schlüssel GS beispielsweise die Absolutzeit und schreibt sie durch Zugreifen auf die Speicherkartenschnittstelle 7 in die Speicherkarte 6 ein. Dadurch sind z. B. etwaige Manipulationen des Zeitgebers 15 durch den Benutzer der Steuerung 5 erkennbar. Diese Vorgehensweise ist auch bezüglich anderer Informationen prinzipiell möglich.

Sodann fragt der Prozessor 9 einen prozessorinternen Speicher 16 ab und vergleicht dessen Inhalt mit dem Individualisierungscode IC. Je nach dem Ergebnis dieses Vergleichs wird wieder die weitere Abarbeitung des Computerprogramms 10 eingestellt oder fortgesetzt. Mittels des Individualisierungscodes kann also ein Abarbeiten der Folge 3 von Steuerbefehlen auf eine individuelle Steuerung 5 beschränkt werden.

Beim Fortsetzen der Abarbeitung des Computerprogramms 10 fragt der Prozessor 9 als nächstes über die Mensch-Maschine-Schnittstelle 11 vom Benutzer ein Passwort ab. Dieses Passwort vergleicht er mit dem Benutzercode BC. Auch hier wird wieder je nach dem Ergebnis des Vergleichs die weitere Abarbeitung des Computerprogramms 10 fortgesetzt oder eingestellt. Mittels des Benutzercodes BC kann also ein Abarbeiten der Folge 3 von Steuerbefehlen auf einen Benutzer beschränkt werden.

Es ist möglich, dass die Speicherkarte 6 als ursprünglichen Individualisierungscode IC einen Blankocode enthält. Wenn der Prozessor 9 dies bemerkt, verschlüsselt er beispielsweise eine Kombination von momentaner Uhrzeit und dem im prozessorinternen Speicher 16 hinterlegten Code zusammen und hinterlegt sie, verschlüsselt gemäß dem geheimen Schlüssel GS, als neuen Individualisierungscode IC in der Speicherkarte 6. Dadurch ist es möglich, die Speicherkarte 6 blanko auszuliefern, so dass die erste Nutzung der Speicherkarte 6 festlegt, auf welcher individuellen Steuerung 5 die Folge 3 von Steuerbefehlen abarbeitbar sein soll. Die prinzipiell gleiche Vorgehensweise ist auch bezüglich des Benutzercodes BC möglich.

Sodann wird - immer noch unter Abarbeitung des Computerprogramms 10 - der Kommentar K über die Mensch-Maschine-Schnittstelle 11 ausgegeben.

Wenn das Computerprogramm 10 bis hierher abgearbeitet ist, wird die Ausführung der Folge 3 von Steuerbefehlen in die Wege geleitet. Insbesondere wird nunmehr auch der Teil des Binärcodes entschlüsselt und dekomprimiert, der die Folge 3 von Steuerbefehlen enthält. Anhand des Binärcodes wird also von der Steuerung 5 wieder die ursprüngliche Folge 3 von Steuerbefehlen rekonstruiert. Die Folge 3 von Steuerbefehlen wird aber in der Steuerung 5 nicht remanent hinterlegt. Sie wird entweder gar nicht hinterlegt oder aber - und auch dann vorzugsweise nur abschnittweise und dynamisch - in einem flüchtigen Speicher 17 hinterlegt. Unmittelbar nach dem Ermitteln der Steuerbefehle steuert die Steuerung 5 die gesteuerte Einrichtung 8, hier die Werkzeugmaschine 8, sofort an. Das Umcodieren des Binärcodes in die Folge 3 von Steuerbefehlen erfolgt also online während des normalen Betriebs der Steuerung 5.

Gemäß der Darstellung von FIG 2 sind der Decodierer 13 und der Dekompressor 14 Schaltungsblöcke. Selbstverständlich können die Schaltungsblöcke 13, 14 aber auch als Teil des Computerprogramms 10 in Software realisiert sein.

Ferner zeigt FIG 2 ferner einen Aufbau, in dem erst eine Entschlüsselung und danach eine Dekomprimierung erfolgt. Analog zu FIG 1 ist auch hier möglich, nur eine dieser beiden Maßnahmen durchzuführen, die Reihenfolge der Maßnahmen zu vertauschen und die Maßnahmen in einem gemeinsamen Schritt durchzuführen.

Durch die vorliegende Erfindung ergeben sich eine Vielzahl von Vorteilen. Insbesondere ist es beispielsweise nicht erforderlich, die Verfahren zur Erstellung der Folge 3 von Steuerbefehlen und der Abarbeitung der Folge 3 von Steuerbefehlen zu ändern. Vielmehr muss nur, aufbauend auf der Folge 3 von Steuerbefehlen, der Binärcode erzeugt werden bzw. aus dem Binärcode wieder die Folge 3 von Steuerbefehlen rekonstruiert werden. Dennoch ist mittels der vorliegenden Erfindung eine deutliche Reduktion der Übertragungszeiten und des Speicherbedarfs in der Steuerung 5 möglich.

Abschließend sei noch erwähnt, dass die vorliegende Erfindung nicht nur auf vollständige Folgen 3 von Steuerbefehlen, sondern gegebenenfalls auch auf Teilabschnitte solcher Folgen (Unterprogramme) anwendbar ist. Auch ist die vorliegende Erfindung nicht auf die Anwendung bei CNC-Steuerungen 5 beschränkt. Die programmierbare industrielle Steuerung 5 könnte beispielsweise auch eine speicherprogrammierbare Steuerung 5 sein.

## Patentansprüche

1. Programmierverfahren für eine programmierbare industrielle Steuerung (5), insbesondere eine CNC-Steuerung (5),
- wobei eine Folge (3) von Steuerbefehlen, die als solche von der Steuerung (5) sinnvoll interpretierbar und somit ausführbar sind, maschinell in einen Binärcode umcodiert wird, anhand dessen die ursprüngliche Folge (3) von Steuerbefehlen wieder rekonstruierbar ist, und
- wobei der Binärcode für die Steuerung (5) bereitgestellt wird.

2. Programmierverfahren nach Anspruch 1, **dadurch gekennzeichnet, dass** der Binärcode gegenüber der Folge (3) von Steuerbefehlen komprimiert ist.

3. Programmierverfahren nach Anspruch 1 oder 2, **dadurch gekennzeichnet, dass** der Binärcode gegenüber der Folge (3) von Steuerbefehlen kryptographisch verschlüsselt ist.

4. Programmierverfahren nach Anspruch 3, **dadurch gekennzeichnet, dass** der Binärcode in verschlüsselter Form eine Nutzungsschranke (NS) enthält, mittels derer der Umfang der Nutzung der Folge (3) von Steuerbefehlen beschränkbar ist.

5. Programmierverfahren nach Anspruch 3 oder 4, **dadurch gekennzeichnet, dass** der Binärcode in verschlüsselter Form einen Individualisierungscode (IC) enthält, mittels dessen ein Abarbeiten der Folge (3) von Steuerbefehlen auf eine individuelle Steuerung (5) beschränkbar ist.

6. Programmierverfahren nach Anspruch 3, 4 oder 5, **dadurch gekennzeichnet, dass** der Binärcode in verschlüsselter Form einen Benutzercode (BC) enthält, mittels dessen ein Abarbeiten der Folge (3) von Steuerbefehlen auf einen Benutzer beschränkbar ist.

7. Programmierverfahren nach einem der Ansprüche 3 bis 6, **dadurch gekennzeichnet, dass** der Binärcode in verschlüsselter Form einen Kommentar (K) für die Folge (3) von Steuerbefehlen enthält.

8. Programmierverfahren nach einem der Ansprüche 3 bis 7, **dadurch gekennzeichnet, dass** der Binärcode gemäß einem public-key-Verfahren verschlüsselt ist.

9. Mit einem Programmierverfahren nach einem der obigen Ansprüche erstellter Binärcode.

10. Betriebsverfahren für eine programmierbare industrielle Steuerung (5), insbesondere eine CNC-Steuerung (5),
- wobei anhand eines in der Steuerung (5) hinterlegten Binärcodes eine Folge (3) von Steuerbefehlen rekonstruiert wird, die als solche von der Steuerung (5) sinnvoll interpretierbar und somit ausführbar sind,
- wobei die Steuerung (5) unmittelbar nach dem Ermitteln der Steuerbefehle eine gesteuerte Einrichtung (8), z. B. eine Werkzeugmaschine (8), entsprechend ansteuert.

11. Betriebsverfahren nach Anspruch 10, **dadurch gekennzeichnet, dass** der Binärcode gegenüber der Folge (3) von Steuerbefehlen komprimiert ist.

12. Betriebsverfahren nach Anspruch 10 oder 11, **dadurch gekennzeichnet, dass** der Binärcode gegenüber der Folge (3) von Steuerbefehlen kryptographisch verschlüsselt ist.

13. Betriebsverfahren nach Anspruch 12, **dadurch gekennzeichnet, dass** der Binärcode in verschlüsselter Form eine Nutzungsschranke (NS) enthält, mittels derer der Umfang der Nutzung der Folge (3) von Steuerbefehlen beschränkbar ist.

14. Betriebsverfahren nach Anspruch 12 oder 13, **dadurch gekennzeichnet, dass** der Binärcode in verschlüsselter Form einen Individualisierungscode (IC) enthält, mittels dessen ein Abarbeiten der Folge (3) von Steuerbefehlen auf eine individuelle Steuerung (5) beschränkbar ist.

15. Betriebsverfahren nach Anspruch 12, 13 oder 14, **dadurch gekennzeichnet, dass** der Binärcode in verschlüsselter Form einen Benutzercode (BC) enthält, mittels dessen ein Abarbeiten der Folge (3) von Steuerbefehlen auf einen Benutzer beschränkbar ist.

16. Betriebsverfahren nach einem der Ansprüche 12 bis 15, **dadurch gekennzeichnet, dass** der Binärcode in verschlüsselter Form einen Kommentar (K) für die Folge (3) von Steuerbefehlen enthält.

17. Betriebsverfahren nach einem der Ansprüche 12 bis 16, **dadurch gekennzeichnet, dass** der Binärcode gemäß einem public-key-Verfahren entschlüsselt wird.

18. Computerprogramm für eine programmierbare industrielle Steuerung (5), insbesondere eine CNC-Steuerung (5), zur Durchführung eines Betriebsverfahrens nach einem der Ansprüche 10 bis 17.

19. Programmierbare industrielle Steuerung, insbesondere CNC-Steuerung, zur Durchführung eines Betriebsverfahrens nach einem der Ansprüche 10 bis 17.

20. Programmierbare industrielle Steuerung nach Anspruch 19, **dadurch gekennzeichnet, dass** sie mit einem Computerprogramm (10) nach Anspruch 18 programmiert ist.
